# EUROPEAN PATENT APPLICATION

(11) **EP 3 029 998 A1**
(43) Date of publication of application: **08.06.2016**
(21) Application number: 13890746.4
(22) Date of filing: 29.07.2013
(51) Int. Cl.: H04W 48/08

(54) **SIGNALING CONFIGURATION METHOD, DEVICE-TO-DEVICE DISCOVERY METHOD, APPARATUS AND COMMUNICATION SYSTEM**

(71) Applicant: Fujitsu Limited, Kawasaki-shi, Kanagawa 211-8588 (JP)
(72) Inventor: LI, Hongchao, Beijing 100025 (CN); ZHOU, Hua, Beijing 100025 (CN)
(74) Representative: Ward, James Norman
(86) International application number: PCT/CN2013/080349
(87) International publication number: WO 2015/013870

(57) **Abstract**

A signaling configuration method, device-to-device discovery method and apparatus and communication system. The method includes: configuring device-to-device discovery signals, the device-to-device discovery signals including a first discovery signal and a second discovery signal; wherein the first discovery signal is used for device-to-device initial discovery, detection or synchronization, and the second discovery signal is used for carrying auxiliary information. Mutual peer-to-peer (device-to-device) discovery or inter-small cell discovery may be achieved by the configured first discovery signal and second discovery signal, thereby alleviating mutual device-to-device interference, avoiding multiple times of transmission of signals, and lowering power consumption.

## Description

### Technical Field

The present invention relates to the field of communications, and in particular to a signaling configuration method, device-to-device discovery method and apparatus and communication system.

### Background Art

A proximity service of peer-to-peer (P2P) communication or device-to-device (D2D) communication is a relatively direct interaction and communication form between user equipment. If there is no support of infrastructural installations at a network side, the D2D communication is more like an ad hoc network, i.e. a mobile network with no support of wired infrastructural installations. If there is support of the network side, such as D2D being integrated into a cellular communication network, following advantages and applications shall be brought about:
D2D discovery may serve for application of a neighboring device, and such a characteristic of an adjacent user may serve for multiple commercial application levels; D2D communication may be used when neighboring users need communication, and employment of such a communication manner may increase throughput of the system, lower power consumption of the user, and perform traffic offloading from a base station (such as an eNodeB) side; and the technology using D2D as relay enhances cell coverage. In the D2D discovery and the D2D communication, measurement at a UE side is able to provide necessary information for maintenance (establishment, and termination, etc.) of connection of user discovery and communication.

Furthermore, in order to improve cell coverage and user experiences under an LTE-A (long-term evolution advanced) system and increase throughput of the system and data transmission rate of the user, a scenario where multiple small cells are densely deployed and a transmission/receiving technology corresponding to it will be introduced. Such a technology may enhance coverage of the network, increase reuse ratios of resources and throughput of the system, and control totally consumed energies of an access network while satisfying a certain network capacity.

Small cells and small cell clusters may be deployed according to demands of an operator and regional characteristics of traffics by using such low-power nodes as a pico base station (eNB), a remote radio head, and a home base station (eNB), etc. In order that air-interface and access network technologies are more adapted to such channel conditions and environmental characteristics, some new functions and characteristics shall be introduced.

It should be noted that the above description of the background art is merely provided for clear and complete explanation of the present invention and for easy understanding by those skilled in the art. And it should not be understood that the above technical solution is known to those skilled in the art as it is described in the background art of the present invention.

### Summary of the Invention

Embodiments of the present invention provide a signaling configuration method, device-to-device discovery method and apparatus and communication system, which may alleviate mutual device-to-device interference, avoid multiple times of transmission of signals, and lower power consumption.

According to a first aspect of the embodiments of the present invention, there is provided a signaling configuration method, including:
configuring device-to-device discovery signals, the device-to-device discovery signals including a first discovery signal and a second discovery signal; wherein the first discovery signal is used for device-to-device initial discovery, detection or synchronization, and the second discovery signal is used for carrying auxiliary information.

According to a second aspect of the embodiments of the present invention, there is provided a signaling configuration apparatus, including:
a configuring unit configured to configure device-to-device discovery signals, the device-to-device discovery signals including a first discovery signal and a second discovery signal, wherein the first discovery signal is used for device-to-device initial discovery, detection or synchronization, and the second discovery signal is used for carrying auxiliary information.

According to a third aspect of the embodiments of the present invention, there is provided a device-to-device discovery method, including: detecting, by a communication device, a first discovery signal and/or a second discovery signal transmitted by another communication device.

According to a fourth aspect of the embodiments of the present invention, there is provided a device-to-device discovery apparatus, including: a signal detecting unit configured to detect a first discovery signal and/or a second discovery signal transmitted by another communication device.

According to a fifth aspect of the embodiments of the present invention, there is provided a device-to-device discovery method, including: transmitting, by a communication device, a first discovery signal, or a first discovery signal and a second discovery signal.

According to a sixth aspect of the embodiments of the present invention, there is provided a device-to-device discovery apparatus, including:
a transmitting unit configured to transmit a first discovery signal, or transmit a first discovery signal and a second discovery signal.

According to a seventh aspect of the embodiments of the present invention, there is provided a communication device, including the apparatus as described in the second, the fourth or the sixth aspect.

According to an eighth aspect of the embodiments of the present invention, there is provided a communication system, including at least two pieces of terminal equipment, or including at least two base stations, the base stations and the terminal equipment being the device as described in the seventh aspect.

An embodiment of the present invention further provides a computer-readable program, wherein when the program is executed in a signaling configuration apparatus, the program enables a computer to carry out the signaling configuration method as described in the first aspect in the signaling configuration apparatus.

An embodiment of the present invention further provides a storage medium in which a computer-readable program is stored, wherein the computer-readable program enables a computer to carry out the signaling configuration method as described in the first aspect in a signaling configuration apparatus.

An embodiment of the present invention further provides a computer-readable program, wherein when the program is executed in a device-to-device synchronization apparatus, the program enables a computer to carry out the device-to-device discovery method as described in the third or the fifth aspect in the device-to-device discovery apparatus.

An embodiment of the present invention further provides a storage medium in which a computer-readable program is stored, wherein the computer-readable program enables a computer to carry out the device-to-device discovery method as described in the third or the fifth aspect in a device-to-device synchronization apparatus.

An advantage of the embodiments of the present invention exists in that mutual peer-to-peer (device-to-device) discovery or inter-small cell discovery may be achieved by the configured first discovery signal and second discovery signal, thereby alleviating mutual device-to-device interference, avoiding multiple times of transmission of signals, and lowering power consumption.

With reference to the following description and drawings, the particular embodiments of the present invention are disclosed in detail, and the principle of the present invention and the manners of use are indicated. It should be understood that the scope of the embodiments of the present invention is not limited thereto. The embodiments of the present invention contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

The drawings are included to provide further understanding of the present invention, which constitute a part of the specification and illustrate the preferred embodiments of the present invention, and are used for setting forth the principles of the present invention together with the description. It is obvious that the accompanying drawings in the following description are some embodiments of the present invention only, and a person of ordinary skill in the art may further obtain other drawings according to these accompanying drawings without making an inventive effort. In the drawings:
Figures 1A-1C are schematic diagrams of transmitting a first discovery signal and a second discovery signal;
Figure 2 is a flowchart of a device-to-device discovery method of Embodiment 3 of the present invention;
Figure 3 is a schematic diagram of a structure of a device-to-device discovery apparatus of Embodiment 4 of the present invention;
Figure 4 is a schematic diagram of a structure of a device-to-device discovery apparatus of Embodiment 5 of the present invention;
Figure 5 is a flowchart of a device-to-device discovery method of Embodiment 6 of the present invention;
Figure 6 is a schematic diagram of a structure of a device-to-device discovery apparatus of Embodiment 7 of the present invention;
Figure 7 is a flowchart of a device-to-device synchronization method of Embodiment 10 of the present invention;
Figure 8 is a flowchart of a device-to-device synchronization method of Embodiment 11 of the present invention;
Figure 9 is a flowchart of a device-to-device synchronization method of Embodiment 12 of the present invention;
Figure 10 is a flowchart of a device-to-device synchronization method of Embodiment 13 of the present invention;
Figure 11 is a flowchart of a device-to-device synchronization method of Embodiment 14 of the present invention; and
Figure 12 is a flowchart of a device-to-device synchronization method of Embodiment 15 of the present invention.

### Detailed Description of the Invention

Various embodiments of the present invention shall be described below with reference to the accompanying drawings. These embodiments are illustrative only, and are not intended to limit the present invention.

Currently, a primary synchronization signal (PSS) and a secondary synchronization signal (SSS) are periodically transmitted, and UE performs initial synchronization by detecting the PSS and the SSS, and obtains ID of a cell.

However, in a peer-to-peer (P2P) communication or a device-to-device (D2D) communication or a communication system where small cells are deployed, if an existing synchronization signal mechanism is followed to perform discovery of UE, it would be possible to result in that mutual interference is relatively severe due to the number of pieces of UE is large and the UE is densely distributed, and many times of retransmission, detection and demodulation will also result in relatively high power consumption. Furthermore, if part of UE in a public safety application scenario is possible out of the coverage of the communication network, configuration information and indication information of a discovery signal cannot be transmitted to this part of UE.

In order to overcome the above problem, the embodiments of the present invention provide a signaling configuration method, device-to-device discovery method and apparatus and communication system, which may solve the above problem. In these embodiments, the device-to-device may refer to UE-to-UE, and may also refer to base station-to-base station (eNB-to-eNB). The embodiments of the present invention shall be described below with reference to the accompanying drawings.

### Embodiment 1

Embodiment 1 of the present invention provides a signaling configuration method, including: configuring device-to-device discovery signals, the device-to-device discovery signals being divided into a first discovery signal and a second discovery signal; wherein the first discovery signal is used for device-to-device initial discovery, detection or synchronization, and the second discovery signal is used for carrying auxiliary information.

In these embodiments, the device may refer to UE, and may also refer to a base station (such as eNB), the device-to-device may refer to base station-to-base station (eNB-to-eNB), and may also refer to UE-to-UE. Thus mutual peer-to-peer (device-to-device) discovery or inter-small cell discovery may be achieved by the configured device-to-device discovery signal.

In this embodiment, the first discovery signal is denoted as DS-0, and the second discovery signal is denoted as DS-1.

Wherein, the DS-0 may be referred to as an initial signal or a probe signal or a primary discovery signal, and the DS-1 may be referred to as an auxiliary discovery signal/a signal carrying further detailed information.

In this embodiment, the DS-0 is mainly used for device-to-device initial discovery, detection or synchronization. Furthermore, the DS-0 may carry a small amount of related information, such as public safety use, etc., by selecting different sequences. For example, a group of sequences (containing multiple sequences), such as a ZC sequence, an m sequence, or a gold sequence, etc., may be predefined, in which each sequence may be bound with fixed information (including use, etc.). Such a relationship is determined by an agreement between UE, or an agreement between base stations (eNBs) at a network side. When a sequence is detected by the UE, the UE may learn a use of the signal, such as initial synchronization, or resource detection, or channel estimation, or data demodulation, etc., according to an advanced agreement.

The DS-1 may carry further detailed information, i.e. detailed information, such as UE ID, user information and/or a use type, etc., the use type including a transmission mode type, such as unicast, groupcast and multicast, etc.; furthermore, it may also be public safety use or general use, etc. The information may be carried by selecting different sequences, or coding related information and packaging in a string of soft bits. Wherein, the manner of carrying the information by using sequences is similar to that of the DS-0, and shall not be described herein any further.

The number of the sequences used by the above DS-0 may be less than that used by the DS-1; however, it is not limited thereto, and may be determined according to an actual situation.

In this embodiment, the first discovery signal DS-0 may be configured by a communication device at the network side (such as an eNB) and notified to a communication device at the UE side (such as UE); or the communication device is triggered to aperiodically transmit the DS-0, or the communication device periodically transmits the DS-0, such as periodically transmitting the DS-0 at a fixed time-frequency resource position. Likewise, the second discovery signal may also be configured by the network side, such as an eNB; or the communication device is triggered to aperiodically transmit the DS-1 or the communication device periodically transmits the DS-1.

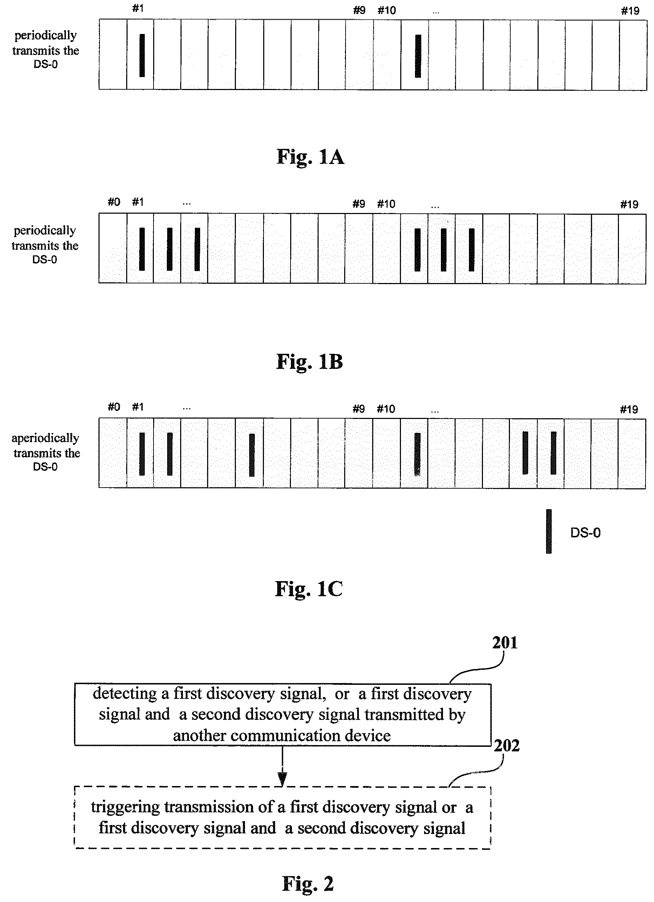

Figs. 1A-1C are schematic diagrams of transmitting the first discovery signal and the second discovery signal. Figs. 1A and 1B are schematic diagrams of periodically transmitting the first discovery signal; wherein in Fig. 1A, the first discovery signal is transmitted once every nine subframes, in Fig. 1B, the first discovery signal is transmitted three times every seven subframes, and Fig. 1C is a schematic diagram of aperiodically transmitting the first discovery signal. Figs. 1A-1C are embodiments of the present invention only, and the present invention only is not limited thereto.

### Embodiment 2

The embodiment of the present invention further provides a signaling configuration apparatus, including: a configuring unit configured to configure device-to-device discovery signals, the device-to-device discovery signals including a first discovery signal and a second discovery signal, wherein the first discovery signal is used for device-to-device initial discovery, detection or synchronization, and the second discovery signal is used for carrying auxiliary information.

In this embodiment, the first discovery signal and the second discovery signal are as described in Embodiment 1, and shall not be described herein any further.

It can be seen from the above embodiment that mutual peer-to-peer (device-to-device) discovery or inter-small cell discovery may be achieved by the configured first discovery signal and second discovery signal, thereby alleviating mutual device-to-device interference, avoiding multiple times of transmission of signals, and lowering power consumption.

### Embodiment 3

Fig. 2 is a flowchart of the device-to-device discovery method of Embodiment 3 of the present invention. As shown in Fig. 2, the method includes:
step 201: detecting, by a communication device, a first discovery signal and/or a second discovery signal transmitted by another communication device.

In this embodiment, the communication device may perform the detection in a predefined time-frequency resource, or perform the detection in the whole band in each transmission time interval (TTI), or configure a time-frequency resource at a network side, and perform the detection in the time-frequency resource.

The communication device may discover another communication device in device-to-device communication with it by detecting the above signals, thereby achieving inter-device discovery.

As shown in Fig. 2, in this embodiment, the method further includes:
step 202: triggering transmission of a first discovery signal and/or a second discovery signal by the communication device.

In this embodiment, when the communication device detects the above signals transmitted by the other communication device, it may trigger the transmission of the first discovery signal and/or the second discovery signal; wherein, functions of the first discovery signal and the second discovery signal and information carried by them as described in Embodiment 1, and shall not be described herein any further.

It can be seen from the above embodiment that when the first discovery signal and/or the second discovery signal transmitted by the other communication device is/are detected, the communication device is triggered to transmit the first discovery signal and/or the second discovery signal, thereby achieving device-to-device initial synchronization, alleviating device-to-device interference, reducing the number of times of retransmission and detection, and making power consumption relatively low.

In this embodiment, the device-to-device may be base station-to-base station (eNB-to-eNB), or UE-to-UE.

In this embodiment, before step 201, the method may further include: transmitting the first discovery signal, or transmitting the first discovery signal and the second discovery signal, by the communication device. Hence, the other communication device is made to perform inter-device discovery according to the signal(s) transmitted by the communication device.

In this embodiment, the communication device may aperiodically or periodically transmit the first discovery signal and the second discovery signal, as shown in Figs. 1A-1C, which shall not be described herein any further. After receiving the above signals transmitted by the communication device, the other communication device transmits the first discovery signal or the first discovery signal and the second discovery signal to the communication device. Hence, in step 201, the communication device may detect the above signals transmitted by the other communication device.

In this embodiment, in step 202, the communication device may trigger the transmission of the first discovery signal and/or the second discovery signal only when a predefined triggering condition is satisfied. In this way, unnecessary transmission of signals may be avoided, and power consumption may further by saved. Wherein, the triggering condition refers to that the communication device successfully detects the first discovery signal, or the first discovery signal and the second discovery signal, or that an intensity of the detected first discovery signal and/or second discovery signal exceeds a predefined first threshold, or that a signal to interference plus noise ratio of the detected first discovery signal and/or second discovery signal exceeds a predefined second threshold.

In this embodiment, relative positions of the first discovery signal and the second discovery signal are fixed. Hence, when the communication device transmits the first discovery signal and the second discovery signal at the same time or is triggered to transmit the second discovery signal, the second discovery signal may be correctly demodulated. For example, the first discovery signal and the second discovery signal are spaced apart by predefined symbols, such as 0, 1, 2 or 3 SC-FDMA symbols (if LTE uplink resources are used), or are spaced apart by predefined symbols, such as 0, 1, 2 or 3 OFDM symbols (if LTE downlink resources are used).

In this embodiment, the communication device may transmit the first discovery signal by broadcasting. For example, the first discovery signal may be transmitted together with a broadcast message or a groupcast message. Hence, when another communication device (such as UE) out of coverage of the network receives corresponding information, i.e. the above message, the other communication device may be triggered to transmit the first discovery signal and/or the second discovery signal. Furthermore, after receiving the above signals transmitted by the other communication device, the communication device may judge whether there exists UE in vicinity, or judge whether information transmitted by the communication device has been correctly received, or judge whether to continue to transmit the first discovery signal.

In this embodiment, after step 201, the method further includes: triggering, by the communication device, the transmission of the first discovery signal and/or the second discovery signal when it is determined that the other communication device supports device-to-device communication. Hence, unnecessary transmission of signals may be avoided, and power consumption may further by saved.

It can be seen from the above embodiment that the communication device may discover the other communication device in device-to-device communication with it by detecting the above signals, thereby achieving the inter-device discovery; furthermore, when the first discovery signal and/or the second discovery signal transmitted by the other communication device is/are detected, the communication device is triggered to transmit the first discovery signal and/or the second discovery signal, thereby achieving device-to-device initial synchronization, alleviating device-to-device interference, reducing the number of times of retransmission and detection, and making power consumption relatively low.

### Embodiment 4

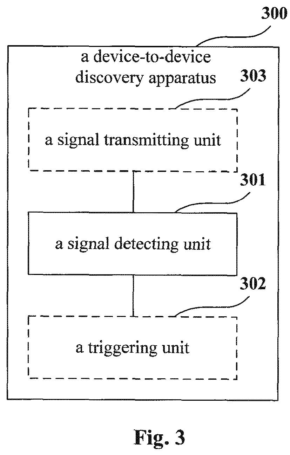

Fig. 3 is a schematic diagram of a structure of the device-to-device discovery apparatus of Embodiment 4 of the present invention. As shown in Fig. 3, the apparatus 300 includes: a signal detecting unit 301 configured to detect a first discovery signal and/or a second discovery signal transmitted by another communication device.

A manner of detection of the signal detecting unit 301 is as described in Embodiment 3, which shall not be described herein any further.

Hence, the other communication device in device-to-device communication with it may be discovered by detecting the above signals, thereby achieving inter-device discovery.

As shown in Fig. 3, the apparatus 300 further includes a triggering unit 302 configured to trigger transmission of a first discovery signal and/or asecond discovery signal when the first discovery signal and/or the second discovery signal transmitted by the other communication device is/are detected.

In this embodiment, the apparatus 300 may further include a signal transmitting unit 303 configured to transmit the first discovery signal, or transmit the first discovery signal and the second discovery signal. In this way, after receiving the above signals, the other communication device may transmit the first discovery signal and/or the second discovery signal, so that the signal detecting unit 301 performs detection. This component is optional, which is shown by dotted lines.

In this embodiment, the signal transmitting unit 303 may aperiodically or periodically transmit the first discovery signal and the second discovery signal, which is as shown in Figs. 1A-1C, and shall not be described herein any further.

In this embodiment, in transmitting the first discovery signal, the signal transmitting unit 303 may transmit the first discovery signal by broadcasting, that is, it may transmit the first discovery signal together with a broadcast message or a multicast message. Hence, when another communication device out of coverage of the network receives corresponding information, i.e. the above message, the other communication device may be triggered to transmit the first discovery signal and/or the second discovery signal. Furthermore, after receiving the above signals transmitted by the other communication device, the communication device may judge whether there exists UE in vicinity, or judge whether information transmitted by the communication device has been correctly received, or judge whether to continue to transmit the first discovery signal.

The apparatus 300 may be a communication device at the network side, such as a base station (such as an eNB); and may also be a user side device, such as UE.

It can be seen from the above embodiment that the communication device may detect the first discovery signal and/or the second discovery signal transmitted by the other communication device, and be triggered to transmit the first discovery signal and/or the second discovery signal, so as to be synchronized with the other communication device.

### Embodiment 5

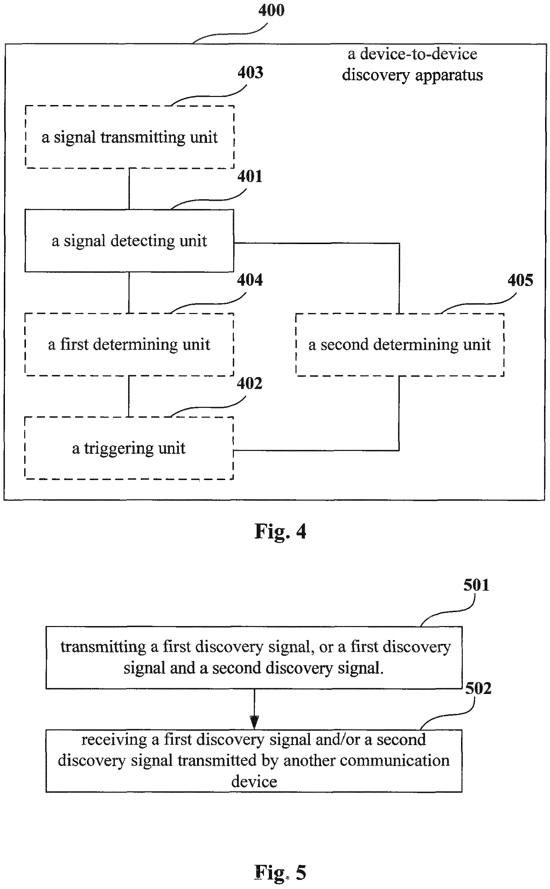

Fig. 4 is a schematic diagram of a structure of the device-to-device discovery apparatus of Embodiment 5 of the present invention. As shown in Fig. 4, the apparatus 400 includes: a signal detecting unit 401, a triggering unit 402 and a signal transmitting unit 403, the functions of which being similar to those in Embodiment 4, and shall not be described herein any further.

In this embodiment, as shown in Fig. 4, the apparatus 400 further includes a first determining unit 404 configured to determine whether a predefined triggering condition is satisfied; wherein the triggering unit 402 triggers transmission of the first discovery signal and/or the second discovery signal when the triggering condition is satisfied; and wherein the triggering condition refers to that the communication device successfully detects the first discovery signal and/or the second discovery signal, or that an intensity of the detected signal(s) exceeds a predefined first threshold, or that a signal to interference plus noise ratio of the detected signal(s) exceeds a predefined second threshold.

As shown in Fig. 4, the apparatus 400 further includes:
a second determining unit 405 configured to determine whether the other communication device supports device-to-device communication; and when a determination result is that the other communication device supports the device-to-device communication, the triggering unit 402 triggers transmission of the first discovery signal and/or the second discovery signal. Hence, when the signal detecting unit 401 detects the signal(s) transmitted by the other communication device, the transmission of the above signal(s) is triggered only when the other communication device possesses an ability to perform device-to-device communication, thereby avoiding unnecessary transmission of signals, and lowering power consumption. The above components 404 and 405 are optional.

The components of the apparatuses of embodiments 4 and 5 may be arbitrarily combined.

It can be seen from the above embodiment that the communication device may detect the first discovery signal and/or the second discovery signal transmitted by the other communication device, and trigger the transmission of the first discovery signal and/or the second discovery signal when the other communication device possesses an ability to perform device-to-device communication or a triggering condition is satisfied, so as to be synchronized with the other communication device.

### Embodiment 6

Fig. 5 is a flowchart of the device-to-device synchronization method of Embodiment 6 of the present invention. As shown in Fig. 5, the method includes:
step 501: transmitting, by a communication device, a first discovery signal, or a first discovery signal and a second discovery signal.

After detecting the above signal(s) transmitted by the communication device, another communication device may perform inter-device discovery according to the above signal(s).

In this embodiment, as shown in Fig. 5, the method may further include:
step 502: receiving a first discovery signal and/or a second discovery signal transmitted by another communication device.

In this embodiment, after receiving the above signals(s), the communication device may trigger the other communication device to transmit the first discovery signal and/or the second discovery signal, so as to achieve inter-device initial synchronization.

Wherein, functions of the first discovery signal and the second discovery signal and information carried by them are similar to those described in Embodiment 1, and shall not be described herein any further.

In this embodiment, in step 501, the communication device may periodically or aperiodically transmit the above signal(s), i.e. the first discovery signal and/or the second discovery signal.

Furthermore, the communication device (such as UE) may also broadcast the first discovery signal, and after the first discovery signal and/or the second discovery signal transmitted by the other communication device is/are received, the method further includes: judging whether there exists another communication device in vicinity, or judging whether information (such as the first discovery signal, or the first discovery signal and the second discovery signal) transmitted by the communication device has been correctly received, or judging whether to continue to transmit the first discovery signal, according to the received first discovery signal or the first discovery signal and the second discovery signal.

### Embodiment 7

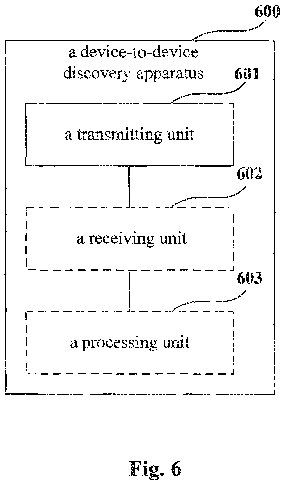

Fig. 6 is a schematic diagram of a structure of the device-to-device synchronization apparatus of Embodiment 7 of the present invention. As shown in Fig. 6, the apparatus 600 includes: a transmitting unit 601 configured to transmit a first discovery signal, or transmit a first discovery signal and a second discovery signal.

It can be seen from the above embodiment that after detecting the above signal(s) transmitted by the communication device, the other communication device may perform inter-device discovery according to the above signal(s).

As shown in Fig. 6, the apparatus 600 further includes a receiving unit 602 configured to receive a first discovery signal and/or a second discovery signal transmitted by another communication device.

In this embodiment, the transmitting unit 601 may periodically or aperiodically transmit the above signal(s); and furthermore, it may transmit the first discovery signal by broadcasting. As shown in Fig. 6, the apparatus 600 further includes a processing unit 603;
wherein the processing unit 603 is configured to judge whether there exists another communication device in vicinity, or judge whether information transmitted by the communication device has been correctly received, or judge whether to continue to transmit the first discovery signal, according to the received first discovery signal and/or second discovery signal, after the receiving unit 602 receives the first discovery signal and/or the second discovery signal transmitted by the other communication device.

It can be seen from the above embodiment that the communication device may transmit the first discovery signal by broadcasting, so that the other communication device out of coverage of the network may also obtain the first discovery signal, and trigger the transmission of the first discovery signal and/or the second discovery signal, so as to achieve inter-device discovery, or further achieve inter-device initial synchronization.

### Embodiment 8

Embodiment 8 of the present invention further provides a communication device, including the apparatus as described in Embodiment 2, or 4, or 5, or 7.

The communication device may be a base station (an eNBs) at a network side, and may also be UE, with its structure being as described in the above embodiments, which shall not be described herein any further.

### Embodiment 9

Embodiment 9 of the present invention further provides a communication system, including at least two pieces of UE, and/or at least two base stations (eNBs), which may perform device-to-device communication, i.e. UE-to-UE communication or base station to base station (eNB-to-eNB) communication, and its discovery method is as described in Embodiment 3 or 6, which shall not be described herein any further. Furthermore, communication may be performed between the UE and eNBs in the communication system, which is similar to the prior art, and shall not be described herein any further.

The device-to-device synchronization method of the embodiment of the present invention shall be described below in detail with reference to a particular scenario.

### Embodiment 10

Description shall be given taking D2D communication as an example.

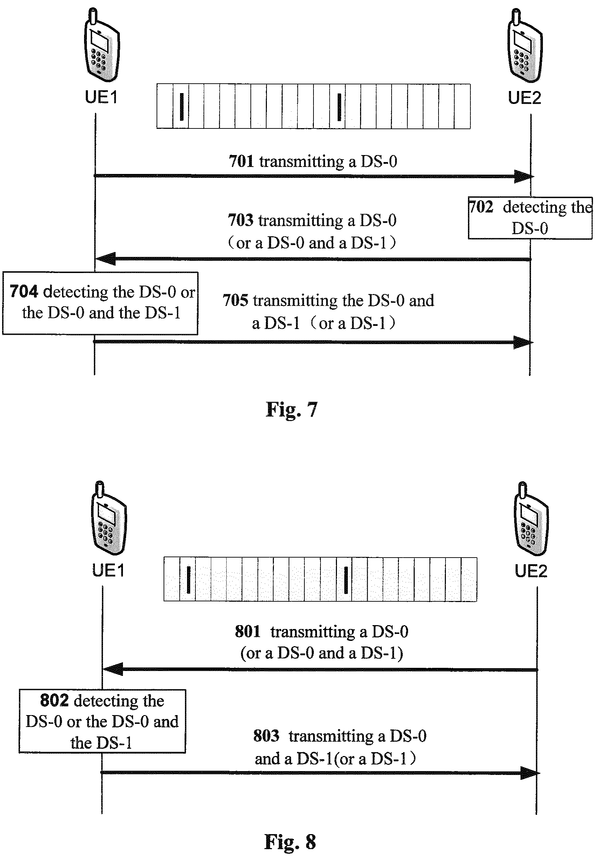

Fig. 7 is a flowchart of the device-to-device synchronization method of Embodiment 10 of the present invention. Description shall be given taking that the communication network includes two pieces of UE, such as UE1 and UE2, as an example. Wherein, a first discovery signal is denoted by DS-0, and a second discovery signal is denoted by DS-1.

As shown in Fig. 7, the UE may periodically transmit the DS-0, that is, the DS-0 is transmitted every 8 subframes.

As shown in Fig. 7, the method includes:
step 701: transmitting a DS-0 by UE1; for example, the DS-0 may be transmitted according to a predetermined time interval;
step 702: detecting the DS-0 by UE2 in a predetermined time-frequency resource, so as to discover UE in communication with it;
step 703: transmitting a DS-0 by UE2 to UE1;
   for example, after detecting the DS-0 transmitted by UE1, UE2 transmits the DS-0 to UE1; however, it is not limited thereto, and it may also feed back a DS-0 and a DS-1 to UE1;
step 704: detecting the DS-0 transmitted by UE2 by UE1;
   if the DS-0 and the DS-1 are transmitted in step 703, UE1 detects the DS-0 and the DS-1;
step 705: triggering, by UE1, transmission of the DS-0 and a DS-1;
   in this embodiment, UE1 may further transmit a DS-1 to UE2.

Hence, after receiving the DS-0 and the DS-1 or receiving the DS-1, UE2 may demodulate the DS-1 according to a predetermined position of the DS-0 relative to the DS-1, so as to obtain information carried by the DS-1.

### Embodiment 11

Description shall be given taking D2D communication as an example. Fig. 8 is a flowchart of the device-to-device synchronization method of Embodiment 11 of the present invention.

As shown in Fig. 8, the UE may periodically transmit a DS-0, that is, the DS-0 is transmitted every 8 subframes.

As shown in Fig. 8, the method includes:
step 801: transmitting a DS-0 or a DS-0 and a DS-1 by UE2;
   for example, the DS-0 and the DS-1 may be transmitted according to a predetermined time interval;
step 802: detecting the DS-0 or the DS-0 and the DS-1 by UE1 in a predetermined time-frequency resource, so as to discover UE in communication with it; and
step 803: transmitting a DS-0 and a DS-1 by UE1 to UE2;
   for example, after UE2 detects the DS-0 or the DS-0 and the DS-1 transmitted by UE1, UE1 may transmit the DS-0 and the DS-1 to UE2.

Hence, after receiving the DS-0 and the DS-1, UE2 may demodulate the DS-1 according to a predetermined position of the DS-0 relative to the DS-1, so as to obtain information carried by the DS-1.

It can be seen from the above embodiment that the UE2 may discovery UE communication with it by the detected DS-0 transmitted by UE1, transmit a DS-0 or a DS-0 and a DS-1 to UE1, and trigger the UE1 to transmit a DS-0 or a DS-0 and a DS-1, so as to achieve inter-device synchronization.

### Embodiment 12

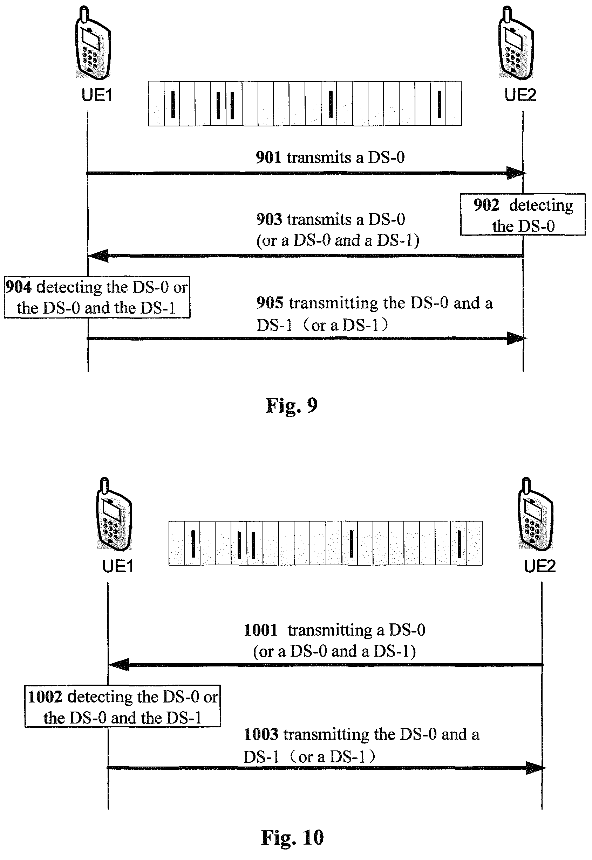

Fig. 9 is a flowchart of the device-to-device synchronization method of Embodiment 12 of the present invention, which is similar to Embodiment 12. What is different from Embodiment 10 is that in step 901, the UE aperiodically transmits the DS-0.

In step 902, UE2 may perform the detection in the whole band at each TTI.

### Embodiment 13

Fig. 10 is a flowchart of the device-to-device synchronization method of Embodiment 13 of the present invention, which is similar to Embodiment 13. What is different from Embodiment 11 is that in step 1001, the UE aperiodically transmits the DS-0 or the DS-0 and the DS-1.

In step 1002, UE1 may perform the detection in the whole band at each TTI.

In the above embodiments, for the cases where the DS-0 or the DS-0 and the DS-1 are periodically transmitted, the communication device may perform the detection in the predetermined time-frequency resource; and for the cases where the DS-0 or the DS-0 and the DS-1 are aperiodically transmitted, the communication device may perform the detection in the whole band at each TTI; or when the network side configures time-frequency resources for transmitting the above discovery signals, the communication device performs the detection in the time-frequency resources configured by the network side.

In the above embodiments, in steps 701, 801, 901 and 1001, the first discovery signal may also be transmitted by broadcasting, which is as described in embodiments 3-7, and shall not be described herein any further.

The above description is given taking the UE-to-UE communication as an example, and the base station-to-base station (eNB-to-eNB) communication is similar to the above embodiments, and only cases similar to embodiments 10 and 13 are illustrated.

### Embodiment 14

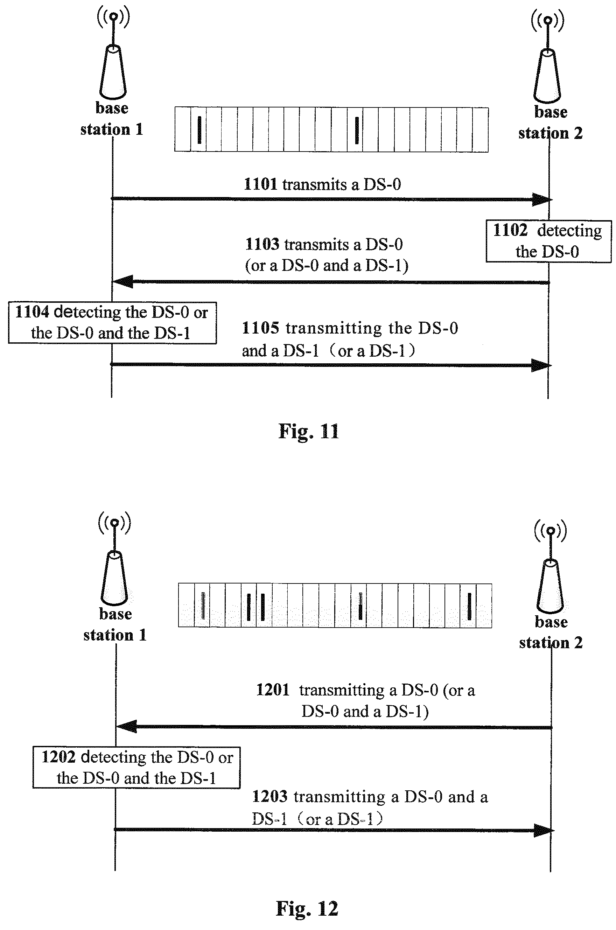

Fig. 11 is a flowchart of the device-to-device synchronization method of Embodiment 14 of the present invention. As shown in Fig. 11, base station-to-base station (eNB-to-eNB) cell discovery and synchronization are shown, which is similar to Embodiment 10 shown in Fig. 7, and shall not be described herein any further.

### Embodiment 15

Fig. 12 is a flowchart of the device-to-device synchronization method of Embodiment 15 of the present invention. As shown in Fig. 12, base station-to-base station (eNB-to-eNB) cell discovery and synchronization are shown, which is similar to Embodiment 13 shown in Fig. 10, and shall not be described herein any further.

An embodiment of the present invention further provides a computer-readable program, wherein when the program is executed in a signaling configuration apparatus, the program enables a computer to carry out the signaling configuration method as described in Embodiment 1 in the signaling configuration apparatus.

An embodiment of the present invention further provides a storage medium in which a computer-readable program is stored, wherein the computer-readable program enables a computer to carry out the signaling configuration method as described in Embodiment 1 in a signaling configuration apparatus.

An embodiment of the present invention further provides a computer-readable program, wherein when the program is executed in a device-to-device synchronization apparatus, the program enables a computer to carry out the device-to-device discovery method as described in Embodiment 3, or 6, or 10 or 13, in the device-to-device synchronization apparatus.

An embodiment of the present invention further provides a storage medium in which a computer-readable program is stored, wherein the computer-readable program enables a computer to carry out the device-to-device discovery method as described in Embodiment 3, or 6, or 10 or 13, in a device-to-device synchronization apparatus.

The above apparatuses and methods of the present invention may be implemented by hardware, or by hardware in combination with software. The present invention relates to such a computer-readable program that when the program is executed by a logic device, the logic device is enabled to carry out the apparatus or components as described above, or to carry out the methods or steps as described above. The present invention also relates to a storage medium for storing the above program, such as a hard disk, a floppy disk, a CD, a DVD, and a flash memory, etc.

The present invention is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

## Claims

1. A signaling configuration method, comprising:
configuring device-to-device discovery signals, the device-to-device discovery signals comprising a first discovery signal and a second discovery signal; wherein the first discovery signal is used for device-to-device initial discovery, detection or synchronization, and the second discovery signal is used for carrying auxiliary information.

2. The method according to claim 1, wherein the first discovery signal and the second discovery signal are configured by a network side communication device or a user side communication device, or configured by the network side communication device and reported to the user side communication device.

3. The method according to claim 1, wherein relate information of the first discovery signal is carried by different sequences, and auxiliary information of the second discovery signal is carried by different sequences or by means of bit packaging;
and wherein the number of discovery sequences to which the first discovery signal corresponds is less than the number of discovery sequences to which the second discovery signal corresponds.

4. A signaling configuration apparatus, comprising:
a configuring unit configured to configure device-to-device discovery signals, the device-to-device discovery signals comprising a first discovery signal and a second discovery signal, wherein the first discovery signal is used for device-to-device initial discovery, detection or synchronization, and the second discovery signal is used for carrying auxiliary information.

5. A device-to-device discovery method, comprising:
detecting, by a communication device, a first discovery signal and/or a second discovery signal transmitted by another communication device.

6. The method according to claim 5, wherein the method further comprises:
triggering transmission of a first discovery signal and/or a second discovery signal.

7. The method according to claim 5, wherein prior to detecting the first discovery signal and/or the second discovery signal transmitted by the other communication device, the method further comprises:
transmitting a first discovery signal, or transmitting a first discovery signal and a second discovery signal;
and the detecting, by a communication device, a first discovery signal and/or a second discovery signal transmitted by another communication device, comprises: detecting, by the communication device, the first discovery signal and/or the second discovery signal transmitted by the other communication device according to the first discovery signal and/or the second discovery signal transmitted by the communication device.

8. The method according to claim 7, wherein the communication device aperiodically or periodically transmits the first discovery signal, or the first discovery signal and the second discovery signal, or transmits the first discovery signal by broadcasting.

9. The method according to claim 6, wherein, when a predefined triggering condition is satisfied, the communication device triggers the transmission of the first discovery signal and/or the second discovery signal; wherein the triggering condition refers to that the communication device successfully detects the first discovery signal and/or the second discovery signal, or that an intensity of the detected first discovery signal and/or second discovery signal exceeds a predefined first threshold, or that a signal to interference plus noise ratio of the detected first discovery signal and/or second discovery signal exceeds a predefined second threshold.

10. The method according to claim 5 or 6 or 7, wherein relative positions of the first discovery signal and the second discovery signal are fixed.

11. The method according to claim 5, wherein after detecting the first discovery signal and/or the second discovery signal transmitted by the other communication device, the method further comprises:
triggering, by the communication device, the transmission of the first discovery signal and/or the second discovery signal when it is determined that the other communication device supports device-to-device communication.

12. The method according to claim 5, wherein related information of the first discovery signal is carried by different sequences, and auxiliary information of the second discovery signal is carried by different sequences or by means of bit packaging;
and wherein the number of discovery sequences to which the first discovery signal corresponds is less than the number of discovery sequences to which the second discovery signal corresponds.

13. A device-to-device discovery apparatus, comprising:
a signal detecting unit configured to detect a first discovery signal and/or a second discovery signal transmitted by another communication device.

14. The apparatus according to claim 13, wherein the apparatus further comprises:
a triggering unit configured to trigger transmission of a first discovery signal and/or a second discovery signal when the first discovery signal or the first discovery signal and the second discovery signal transmitted by the other communication device is/are detected.

15. The apparatus according to claim 13, wherein the apparatus further comprises:
a signal transmitting unit configured to transmit a first discovery signal, or transmit a first discovery signal and a second discovery signal, prior to the detection by the signal detecting unit.

16. The apparatus according to claim 14, wherein the apparatus further comprises:
a first determining unit configured to determine whether a predefined triggering condition is satisfied; wherein the triggering unit triggers the transmission of the first discovery signal and/or the second discovery signal when the triggering condition is satisfied; and wherein the triggering condition refers to that the communication device successfully detects the first discovery signal, or the first discovery signal and the second discovery signal, or that an intensity of the detected signal(s) exceeds a predefined first threshold, or that a signal to interference plus noise ratio of the detected signal(s) exceeds a predefined second threshold.

17. The apparatus according to claim 15, wherein the signal transmitting unit aperiodically or periodically transmits the first discovery signal and the second discovery signal, or transmits the first discovery signal by broadcasting.

18. The apparatus according to claim 14, wherein the apparatus further comprises:
a second determining unit configured to determine whether the other communication device supports device-to-device communication; and wherein when a determination result is that the other communication device supports the device-to-device communication, the triggering unit triggers the transmission of the first discovery signal and/or the second discovery signal.

19. A device-to-device discovery method, comprising:
transmitting, by a communication device, a first discovery signal, or a first discovery signal and a second discovery signal.

20. The method according to claim 19, wherein the communication device aperiodically or periodically transmits the first discovery signal, or the first discovery signal and the second discovery signal, or transmits the first discovery signal by broadcasting.

21. The method according to claim 19, wherein the method further comprises:
receiving a first discovery signal and/or a second discovery signal transmitted by another communication device according to the first discovery signal, or the first discovery signal and the second discovery signal transmitted by the communication device.

22. The method according to claim 21, wherein the communication device broadcasts the first discovery signal and after the first discovery signal and/or the second discovery signal transmitted by the other communication device is/are received, the method further comprises:
judging whether there exists another communication device in vicinity, or judging whether information transmitted by the communication device has been correctly received, or judging whether to continue to transmit the first discovery signal, according to the received first discovery signal and/or the second discovery signal.

23. A device-to-device discovery apparatus, comprising:
a transmitting unit configured to transmit a first discovery signal, or transmit a first discovery signal and a second discovery signal.

24. The apparatus according to claim 23, wherein the apparatus further comprises:
a receiving unit configured to receive a first discovery signal and/or a second discovery signal transmitted by another communication device according to the first discovery signal, or the first discovery signal and the second discovery signal transmitted by the communication device.

25. The apparatus according to claim 23, wherein the transmitting unit transmits the first discovery signal by broadcasting, and the apparatus further comprises:
a processing unit configured to judge whether there exists another communication device in vicinity, or judge whether information transmitted by the communication device has been correctly received, or judge whether to continue to transmit the first discovery signal, according to the received first discovery signal and/or second discovery signal, after the receiving unit receives the first discovery signal and/or the second discovery signal transmitted by the other communication device.

26. A communication device, comprising the apparatus as claimed in claim 4, or 13 or 23.

27. A communication system, comprising at least two pieces of terminal equipment, or comprising at least two base stations, the base stations and the terminal equipment being the device as claimed in claim 26.

28. A computer-readable program, wherein when the program is executed in a signaling configuration apparatus, the program enables a computer to carry out the signaling configuration method as claimed in any one of claims 1-3 in the signaling configuration apparatus.

29. A storage medium in which a computer-readable program is stored, wherein the computer-readable program enables a computer to carry out the signaling configuration method as claimed in any one of claims 1-3 in a signaling configuration apparatus.

30. A computer-readable program, wherein when the program is executed in a device-to-device synchronization apparatus, the program enables a computer to carry out the device-to-device discovery method as claimed in any one of claims 5-12 and 19-22 in the device-to-device discovery apparatus.

31. A storage medium in which a computer-readable program is stored, wherein the computer-readable program enables a computer to carry out the device-to-device discovery method as claimed in any one of claims 5-12 and 19-22 in a device-to-device synchronization apparatus.
